# FASCICULE DE BREVET EUROPEEN

(11) **EP 3 513 050 B1**
(45) Date de publication et mention de la délivrance du brevet: **13.05.2020**
(21) Numéro de dépôt: 17768848.8
(22) Date de dépôt: 06.09.2017
(51) Int. Cl.: F02C 7/32, F16D 9/08

(54) **DISPOSITIF DE RUPTURE D'ARBRE D'UN GÉNÉRATEUR ÉLECTRIQUE**
WELLENBRUCHVORRICHTUNG FÜR EINEN ELEKTRISCHEN GENERATOR
SHAFT BREAK DEVICE FOR AN ELECTRICAL GENERATOR

(30) Priorité: 16.09.2016 FR 1658672
(43) Date de publication de la demande: 24.07.2019
(73) Titulaire: Safran Electrical & Power, 31702 Blagnac Cedex (FR)
(72) Inventeur: RODRIGUES, Fernand, 31702 Blagnac (FR)
(74) Mandataire: Cabinet Beau de Loménie
(86) Numéro de dépôt international: PCT/FR2017/052357
(87) Numéro de publication internationale: WO 2018/050987

(56) Documents cités:
- EP-A1- 0 974 013
- FR-A1- 2 911 917
- SU-A1- 503 062

## Description

### Arrière-plan de l'invention

L'invention concerne les turbines à gaz et plus particulièrement un dispositif de protection de la boîte d'engrenages de puissance (AGB, pour « Accessory Gear Box ») et du moteur qui lui est associé. Le domaine d'application de l'invention est celui des turbines à gaz pour moteurs aéronautiques, d'avions ou d'hélicoptères, ainsi que pour des groupes auxiliaires de puissance (ou APU, pour « Auxiliary Power Unit »).

Dans une turbine à gaz, un certain nombre d'équipements, ou accessoires, sont entraînés par une transmission mécanique à partir d'une puissance mécanique prélevée sur un arbre de turbine. Cette transmission mécanique, qui comprend un ensemble de pignons logés dans un carter est dénommée boîte de transmission, boîte d'engrenages de puissance ou boîte de relais d'accessoires. Les accessoires comprennent notamment diverses pompes pour la production d'énergie hydraulique, l'alimentation en carburant, la lubrification, ainsi qu'un ou plusieurs démarreurs et/ou générateurs électriques.

Les générateurs électriques installés sur les avions sont en général munis de dispositifs de protection ayant pour fonction de séparer physiquement le générateur de la boîte d'engrenages de puissance lorsqu'un incident est détecté par un système de surveillance associé. Classiquement, ces dispositifs de protection sont munis d'une section à casser (dispositif passif) calibrée pour un couple de rupture correspondant à 5 à 10 fois le couple nominal ou opérationnel maximum et d'un système commandé de déconnexion (dispositif actif) permettant le débrayage mécanique du générateur électrique pour des charges et vitesses intermédiaires. Un exemple est décrit dans le document FR 2911917 A1.

Malheureusement, les systèmes commandés actuels de déconnexion souffrent d'un manque de protection efficace sur toute leur plage de fonctionnement: faible vitesse, haute vitesse, couples intermédiaires. Ils ne permettent notamment pas une déconnexion sous charge ou sous très fortes vitesses de rotation. Par conséquent, lorsque des pannes apparaissent créant un fort couple au niveau du système de déconnexion commandé supérieur à la capacité de ce dispositif actif et inférieur au couple de rupture de la section à casser, le débrayage mécanique du générateur devient impossible. Ce qui se traduit par une dissipation d'énergie pouvant provoquer des endommagements importants au niveau du générateur voire aussi au niveau de la nacelle moteur.

### Objet et résumé de l'invention

Il est donc souhaitable de faire baisser le couple de rupture de la section à casser de façon à le rendre aussi proche que possible du couple d'activation du système commandé de déconnexion et seulement à ce moment-là.

A cet effet, selon l'invention, il est proposé un ensemble comportant une boîte d'engrenages de puissance munie d'un dispositif de protection et en liaison mécanique avec un générateur électrique dont un arbre support comporte une section calibrée à casser destinée à assurer une déconnexion physique du générateur électrique de la boîte d'engrenages de puissance lorsqu'un incident est détecté au niveau de ce générateur électrique, caractérisé en ce que le dispositif de protection comporte un mécanisme de déverrouillage muni d'un verrou pour, sous l'action d'une unité de commande externe, libérer un outil entailleur afin de sectionner ladite section calibrée à casser.

Ainsi, le dispositif de protection de l'invention peut être dimensionné pour un couple très faible, aussi proche que possible de 0 Nm, ce qui permet de réduire la masse et l'encombrement globaux du générateur électrique auquel il est intégré. En outre, suite à la possibilité de décroitre le couple de rupture de la section à casser, il est possible de surdimensionner celle-ci afin d'éviter les ruptures intempestives et de fatigue notamment.

De préférence, ledit outil entailleur agit à l'encontre d'un ressort de poussée et comporte un pointeau à pointe carbure.

Avantageusement, ledit mécanisme de déverrouillage est un électroaimant ou un moteur couple.

De préférence, ladite unité de commande externe est intégrée dans l'ECU d'un moteur d'avion ou dans le FADEC d'un avion.

L'ensemble est monté à une extrémité arrière d'un boitier dans lequel est intégré ledit générateur électrique et dont une extrémité avant est destinée à recevoir ladite boîte d'engrenages de puissance.

L'invention concerne également un moteur aéronautique à turbine à gaz muni d'un tel dispositif de protection.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est un schéma très simplifié d'un moteur à turbine à gaz, et
- les figures 2A et 2B sont respectivement une vue en coupe axiale et une vue en bout d'un générateur électrique associé à une boîte d'engrenages de puissance muni d'un dispositif de protection selon l'invention.

### Description détaillée de modes de réalisation

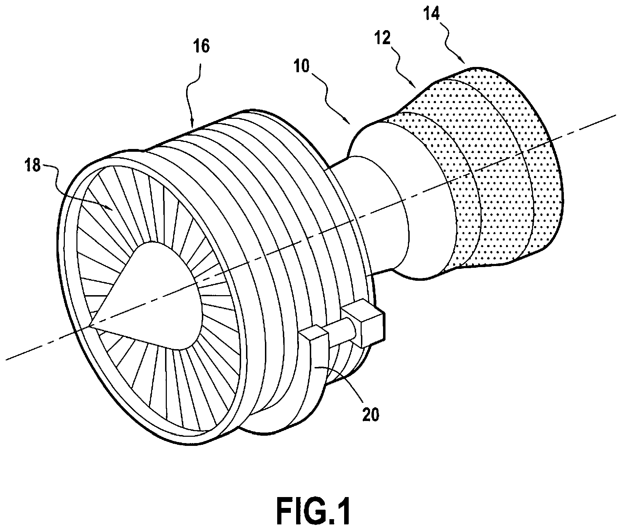

Un domaine d'application de l'invention est celui des moteurs d'avions à turbine à gaz, tel que celui représenté très schématiquement sur la figure 1, l'invention étant toutefois applicable à d'autres moteurs aéronautiques à turbine à gaz, typiquement des moteurs d'hélicoptères, ainsi qu'à des groupes auxiliaires de puissance à turbine à gaz.

Le moteur de la figure 1 comprend une chambre de combustion 10, les gaz de combustion issus de cette chambre entraînant une turbine haute-pression 12 et une turbine basse-pression 14. La turbine haute pression est couplée par un arbre à un compresseur haute-pression 16 alimentant la chambre de combustion 10 en air sous pression tandis que la turbine basse pression est couplée par un autre arbre à une soufflante 18 en entrée du moteur. Une boîte d'engrenages de puissance 20, ou boîte de relais d'accessoires est reliée par une prise de puissance mécanique à un des arbres de turbine et comprend un ensemble de pignons pour l'entraînement de différents accessoires, dont au moins un générateur électrique.

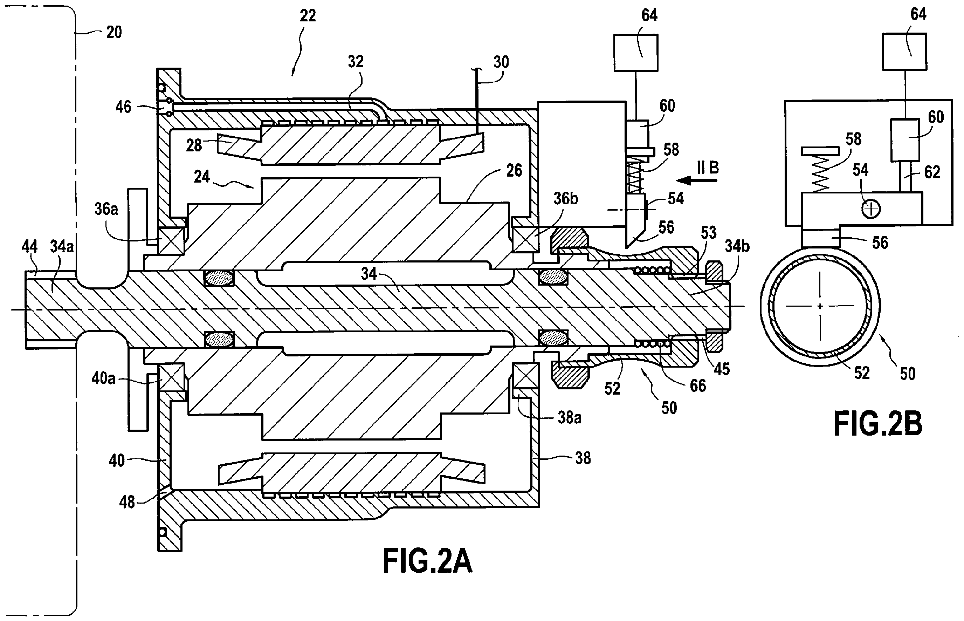

Comme le montre la figure 2, le générateur électrique 22 comprend une génératrice principale synchrone 24 qui est logée dans un carter ou boîtier 32 et dont le rotor de la génératrice, portant les enroulements de l'inducteur 26 est monté sur un arbre 34 supporté dans le boîtier 32 par des paliers à roulements 36a, 36b. Le stator de la génératrice portant les enroulements de l'induit 28 est fixé au boîtier 32 à l'intérieur de celui-ci. Le harnais 30 transportant la tension produite sur un bus d'un circuit de distribution d'énergie électrique tel qu'un réseau de bord (non représenté) de l'avion, est relié à l'induit 28 par exemple en traversant la paroi 32 de façon étanche.

Le boîtier 32, de forme générale cylindrique, est fermé à ses deux extrémités 38, 40. A son extrémité avant, le boîtier 32 est fermé par une paroi 40 qui présente une ouverture centrale délimitée par une partie annulaire 40a solidaire de la paroi 40. La partie annulaire 40a porte le palier 36a et porte également un joint d'étanchéité à lèvre 42 dont l'extrémité s'appuie sur la surface externe de l'arbre support 34, ou tout autre système d'étanchéité par exemple un joint tournant ou de type labyrinthe, assurant une étanchéité par rapport à l'huile de refroidissement circulant dans le boitier (voir les orifices d'entrée 46 et de sortie 48 de cette huile). L'arbre support 34 fait saillie à travers l'ouverture de la paroi 40 en se prolongeant à l'extérieur du boîtier 32 par une partie 34a de diamètre avantageusement réduit ou non. Celle-ci porte un organe d'accouplement mécanique sous forme par exemple de cannelures 44 et se prolonge au-delà de celles-ci pour la liaison avec la boîte d'engrenages de puissance 20. A l'autre extrémité, ou extrémité arrière, le boitier est fermé par exemple par boulonnage d'une paroi 38 qui présente une ouverture centrale délimitée par une partie annulaire 38a et portant le palier 36b. L'arbre support 34 fait saillie à travers l'ouverture de la paroi 38 en se prolongeant à l'extérieur du boîtier 32 par une partie 34b de diamètre réduit ou non. La partie 34b porte un organe d'accouplement mécanique sous forme par exemple de cannelures 45 pour la liaison avec le générateur 22.

Selon l'invention, il est proposé de placer un dispositif de protection 50 de la boîte d'engrenages de puissance 20 à l'arrière du boitier, à l'extrémité opposée de l'arbre support en liaison avec cette boîte d'engrenages de puissance. Plus précisément, il s'agit d'ajouter à une section à casser 52 disposée à l'extrémité arrière au niveau de l'arbre support 34 et à son outil entailleur 54, un verrou commandé afin de « fragiliser » la section à casser et ainsi provoquer sa rupture pour un couple aussi faible que possible (c'est-à-dire aussi proche que possible de 0 Nm) de sorte que le système de déconnexion commandé (dispositif actif de l'art antérieur) devient inutile. Ainsi, la fiabilité et la robustesse de fonctionnement du système passif antérieur est maintenu, la section calibrée à casser étant conservée.

La section à casser 52 comprend une extrémité portant par exemple des cannelures complémentaires 53 coopérant avec les cannelures 45 pour former la liaison mécanique entre l'arbre support 34 et les enroulements de l'inducteur 26 du générateur 22.

On notera que cette disposition à l'arrière du boitier 32 permet de remplacer facilement le générateur électrique sans avoir à le démonter dans son ensemble après une rupture de la section à casser que celle-ci ait été commandée depuis l'unité de contrôle 64 ou s'est rompue sous l'effet d'un fort couple (sans commande spécifique).

Pour assurer le sectionnement de la section calibrée à casser, l'outil entailleur comporte un pointeau à pointe carbure 56 agissant à l'encontre d'un ressort de poussée 58 et dont l'action de sectionnement est retenue par un verrou 62 d'un mécanisme de déverrouillage 60 de type électro aimant ou moteur couple actionné par une unité de commande externe 64 qui peut être dédiée ou intégrée dans l'ECU du moteur ou le FADEC de l'avion. La commande du mécanisme de déverrouillage est délivrée par l'unité de commande externe lorsqu'un incident est détecté au niveau du générateur électrique par un système de surveillance (non représenté) qui est de préférence intégré à ce générateur. Un ressort de rappel 66 permet d'assurer une séparation franche en deux parties disjointes de la section à casser 52 une fois celle-ci rompue.

Ainsi, avec le dispositif de protection de l'invention, une déconnexion mécanique est non plus basée sur un couple de rupture 5 à 10 fois supérieur au couple nominal mais sur un couple aussi proche que possible de 0 Nm.

Lorsque le dispositif de protection est activé, la déconnection entre la boîte d'engrenage de puissance 20 et le générateur 22 est réalisée au niveau du pointeau 56. Ainsi le mouvement de la boîte d'engrenage de puissance 20 continue à entrainer l'arbre 34 située à l'intérieur du rotor mais sans que le rotor ne soit entraîné. L'arbre 34 est en contact avec le rotor par deux paliers en élastomères afin de limiter les risques de grippage entre l'arbre et le rotor lorsque la section à casser est rompue.

## Revendications

1. Ensemble comportant une boîte d'engrenages de puissance (20) en liaison mécanique avec un générateur électrique (22) à travers un arbre support (34) d'un dispositif de protection, l'arbre support comportant une section calibrée à casser (52) destinée à assurer une déconnexion physique du générateur électrique de la boîte d'engrenages de puissance lorsqu'un incident est détecté au niveau de ce générateur électrique, **caractérisé en ce que** le dispositif de protection (50) comporte un mécanisme de déverrouillage (60) muni d'un verrou (62) pour, sous l'action d'une unité de commande externe (64), libérer un outil entailleur (54, 56, 58) afin de sectionner ladite section calibrée à casser.

2. Ensemble selon la revendication 1, **caractérisé en ce que** ledit outil entailleur agit à l'encontre d'un ressort de poussée (58).

3. Ensemble selon l'une quelconque des revendications 1 à 2, **caractérisé en ce que** ledit outil entailleur comporte un pointeau à pointe carbure (56).

4. Ensemble selon l'une quelconque des revendications 1 à 3, **caractérisé en ce que** ledit mécanisme de déverrouillage est un électroaimant ou un moteur couple (60).

5. Ensemble selon l'une quelconque des revendications 1 à 4, **caractérisé en ce que** ladite unité de commande externe est intégrée dans l'ECU d'un moteur d'avion ou dans le FADEC d'un avion.

6. Ensemble selon l'une quelconque des revendications 1 à 5, **caractérisé en ce que** ledit dispositif de protection est monté à une extrémité arrière (38) d'un boitier (32) dans lequel est intégré ledit générateur électrique et dont une extrémité avant (40) est destinée à recevoir ladite boîte d'engrenages de puissance.

7. Ensemble selon l'une quelconque des revendications 1 à 6, **caractérisé en ce que** ledit dispositif de protection comporte en outre un ressort de rappel (66) permettant d'assurer une séparation franche en deux parties disjointes de ladite section à casser une fois celle-ci rompue.

8. Moteur aéronautique à turbine à gaz muni d'un ensemble selon l'une quelconque des revendications 1 à 7.

## Patentansprüche

1. Anordnung, umfassend ein Leistungsgetriebe (20), das durch eine Tragwelle (34) einer Schutzvorrichtung mit einem elektrischen Generator (22) in mechanischer Verbindung steht, wobei die Tragwelle einen zu brechenden kalibrierten Abschnitt (52) umfasst, der dazu bestimmt ist, eine physische Trennung des elektrischen Generators vom Leistungsgetriebe sicherzustellen, wenn im Bereich dieses elektrischen Generators ein Vorfall festgestellt wird, **dadurch gekennzeichnet, dass** die Schutzvorrichtung (50) einen Entriegelungsmechanismus (60) umfasst, der mit einem Riegel (62) ausgestattet ist, um unter der Wirkung einer externen Steuereinheit (64) ein Einschneidewerkzeug (54, 56, 58) freizugeben, um den zu brechenden kalibrierten Abschnitt durchzuschneiden.

2. Anordnung nach Anspruch 1, **dadurch gekennzeichnet, dass** das Einschneidewerkzeug gegen eine Schubfeder (58) wirkt.

3. Anordnung nach einem der Ansprüche 1 bis 2, **dadurch gekennzeichnet, dass** das Einschneidewerkzeug einen Körner mit Karbidspitze (56) umfasst.

4. Anordnung nach einem der Ansprüche 1 bis 3, **dadurch gekennzeichnet, dass** der Entriegelungsmechanismus ein Elektromagnet oder ein Drehmomentmotor (60) ist.

5. Anordnung nach einem der Ansprüche 1 bis 4, **dadurch gekennzeichnet, dass** die externe Steuereinheit in die ECU eines Flugzeugtriebwerks oder in die FADEC eines Flugzeugs integriert ist.

6. Anordnung nach einem der Ansprüche 1 bis 5, **dadurch gekennzeichnet, dass** die Schutzvorrichtung an einem hinteren Ende (38) eines Gehäuses (32) angebracht ist, in das der elektrische Generator integriert ist und von dem ein vorderes Ende (40) dazu bestimmt ist, das Leistungsgetriebe aufzunehmen.

7. Anordnung nach einem der Ansprüche 1 bis 6, **dadurch gekennzeichnet, dass** die Schutzvorrichtung ferner eine Rückstellfeder (66) umfasst, die ermöglicht, eine klare Trennung in zwei getrennte Teile des zu brechenden Abschnitts sicherzustellen, sobald dieser gebrochen ist.

8. Luftfahrt-Gasturbinentriebwerk, das mit einer Anordnung nach einem der Ansprüche 1 bis 7 ausgestattet ist.

## Claims

1. An assembly comprising an accessory gearbox (20) mechanically connected to an electricity generator (22) through a support shaft (34) of a protection device, the support shaft including a calibrated breakable section (52) designed to disconnect the electricity generator physically from the accessory gearbox when an incident is detected on the electricity generator, wherein the protection device comprises an unlocking mechanism (60) provided with a lock (62) that, under the action of an external control unit (64), releases a cutting tool (54, 56, 58) so as to cut said calibrated breakable section.

2. An assembly according to claim 1, **characterized in that** said cutting tool acts against a thrust spring (58).

3. An assembly according to claim 1 or claim 2, **characterized in that** said cutting tool has a punch with a carbide tip (56).

4. An assembly according to any one of claims 1 to 3, **characterized in that** said unlocking mechanism is an electromagnet or a torque motor (60).

5. An assembly according to any one of claims 1 to 4, **characterized in that** said external control unit is integrated in the ECU of an airplane engine or in the FADEC of an airplane.

6. An assembly according to any one of claims 1 to 5, **characterized in that** said protection device is mounted at a rear end (38) of a housing (32) in which said electricity generator is integrated, which housing has a front end (40) designed to receive said accessory gearbox.

7. An assembly according to any one of claims 1 to 6, **characterized in that** said protection device further comprises a return spring (66) enabling the breakable section, once it has broken, to be separated cleanly into two separate parts.

8. A gas turbine aeroengine provided with an assembly according to any one of claims 1 to 7.
